# EUROPÄISCHE PATENTSCHRIFT

(11) **EP 1 518 386 B1**
(45) Veröffentlichungstag und Bekanntmachung des Hinweises auf die Patenterteilung: **22.11.2006**
(21) Anmeldenummer: 03762410.3
(22) Anmeldetag: 20.06.2003
(51) Int. Cl.: H04L 29/08

(54) **SYSTEM UND VERFAHREN ZUR DIREKTEN KOMMUNIKATION ZWISCHEN AUTOMATISIERUNGSGERÄTEN**
SYSTEM AND METHOD FOR DIRECT COMMUNICATION BETWEEN AUTOMATION APPLIANCES
SYSTEME ET PROCEDE DE COMMUNICATION DIRECTE ENTRE DES APPAREILS D'AUTOMATISATION

(30) Priorität: 02.07.2002 DE 10229636
(43) Veröffentlichungstag der Anmeldung: 30.03.2005
(73) Patentinhaber: SIEMENS AKTIENGESELLSCHAFT, 80333 München (DE)
(72) Erfinder: SCHLERETH, Michael, 91452 Wilhermsdorf (DE)
(86) Internationale Anmeldenummer: PCT/DE2003/002067
(87) Internationale Veröffentlichungsnummer: WO 2004/006541

(56) Entgegenhaltungen:
- WO-A-01/50684
- MARMOR M S: "MAKE THE P2P LEAP WITH TOADNODE" WEB TECHNIQUES, MILLER FREEMAN, US, Bd. 5, Nr. 12, Dezember 2000 (2000-12), Seiten 44-49, XP008000376 ISSN: 1086-556X

## Beschreibung

Die Erfindung betrifft ein System sowie ein Verfahren zur Kommunikation und/oder zur Übertragung von Information zwischen Automatisierungsgeräten über ein Datenübertragungssystem.

Die sich auf einer Anlage befindenden Automatisierungsgeräte, insbesondere Steuerungsgeräte wie speicherprogrammierbare Steuerungen oder numerische Steuerungen, aber auch Visualisierungsgeräte, wie Operatorpanels, tauschen in der Regel Meldungen bzw. Informationen miteinander aus. Heutzutage sind die Automatisierungsgeräte zu diesem Zweck über Netze, insbesondere Feldbussysteme, miteinander verbunden. Die Kommunikation zwischen den beteiligten Automatisierungsgeräten erfolgt hierbei über so genannte Protokolle, das heißt Beschreibungen darüber, wie die beteiligten Geräte miteinander kommunizieren. Bei den heutzutage verwendeten Bussystemen werden so genannte proprietäre Protokolle verwendet, die nicht auf einem Standard beruhen. Die Kommunikation zwischen den beteiligten Automatisierungsgeräten erfolgt in der Regel über zentrale Datenverarbeitungseinheiten, welche ebenfalls an das Bussystem angeschlossen sind und welche eingehende Meldungen bzw. Information der Automatisierungsgeräte an die jeweiligen Adressaten weiterleiten.

Aus DE 100 38 557 A1 ist ein System und Verfahren zur Übertragung von Daten über Datennetze, insbesondere über ein Internet mit asynchroner Datenverbindung bekannt. Hierbei wird über eine so genannte Client-Server-Verbindung über eine permanent offene Datenverbindung, die Möglichkeit gegeben, unabhängig von Aktionen des Clients jederzeit Daten vom Server zum Client zu senden.

Aus Marmor, M. S. "make the P2P leap with toadnode" Web Techniques, Miller Freeman, US Bd. 5, Nr. 12, Dezember 2000, pp. 44-49 ist ein Verfahren zur Kommunikation zwischen Web-Nutzern bekannt, bei dem Anfragen an im Web präsente Rechner gestellt werden und diese Rechner ihre Daten dem anfragenden Web-Nutzer zur Verfügung stellen, indem sie direkt auf seinen rechner übertragen werden. Eine Verwendung von Servern zurn Datenübertragung ist hierbei nicht notwendig.

Aus der WO 01/50684 ist ein Verfahren und ein System zur verteilten Steuerung eines "home automation" Systems bekannt. Hierbei wird eine Statusänderung eines Geräts an alle anderen, im System beteiligten Geräte gesendet. Diese Empfänger prüfen, ob die in der Nachricht enthaltenen Änderung für die relevant ist und reagieren entsprechend.

Der Erfindung liegt nun die Aufgabe zugrunde, ein System'sowie ein Verfahren anzugeben, bei dem der Informationsaustausch zwischen den Beteiligten Automatisierungsgeräten bidirektional erfolgen kann, und bei dem die Initiierung der Kommunikation von jedem der beteiligtem Automatisierungsgeräte aus möglich ist.

Diese Aufgabe wird durch ein System zur Kommunikation und/oder Übertragung von Information zwischen Automatisierungsgeräten über ein Datenübertragungssystem gelöst, wobei ein im System beteiligtes Automatisierungsgerät Mittel zum Senden und/oder Empfangen von Anfragen und/oder Antworten aufweist und wobei die Mittel zur direkten Kommunikation und/oder Übertragung von Information zwischen den Automatisierungsgeräten vorgesehen sind. Der Erfindung liegt die Erkenntnis zugrunde, dass die Automatisierungsgeräte auf einer Anlage heutzutage immer komplexere Funktionen erfüllen. Aus diesem Grund benötigen die Automatisierungsgeräte auch immer mehr Information, insbesondere Information anderer, auf der Anlage vorhandener Automatisierungsgeräte, um ihre Funktion zweckgemäß erfüllen zu können. Zu den benötigten Daten gehören z. B. Prozesswerte aus einer Anlage, aber auch Meldungen, Alarme oder ganze Programme, bzw. Softwarekomponenten, die ein Automatisierungsgerät zur Ausführung einer Aufgabe benötigt. Der Austausch von Information zwischen den Automatisierungsgeräten auf einer Anlage wird somit immer wichtiger. Naturgemäß ist es am günstigsten, wenn bei einer Kommunikation beteiligte Partner, in diesem Fall-die Automatisierungsgeräte, die zur Kommunikation.benötigte Information direkt an den jeweiligen Empfänger senden können, bzw. bei Informationsbedarf Anfragen direkt an andere beteiligte Partner stellen können. Eine Sammlung und Verwaltung von Anfragen aber auch Antworten an einer zentralen Stelle, beispielsweise auf einer Datenverarbeitungsvorrichtung, würde den Informationsfluss verzögern und unnötige Verwaltungsaufwände generieren. Das erfindungsgemäße System zur Kommunikation erweist sich somit als vorteilhaft, da die beteiligten Kommunikationspartner, nämlich die Automatisierungsgeräte, direkt miteinander kommunizieren können und die angefragte Information von einem der beteiligten Automatisierungsgeräte auch direkt an das Automatisierungsgerät, welches ursprünglich die Anfrage gestellt hat, gesendet werden kann. Bei einer derartigen direkten Kommunikation kann jeder der Teilnehmer sowohl Informationen holen als auch zur Verfügung stellen.

Eine weitere vorteilhaft Ausbildung der Erfindung ist dadurch gekennzeichnet, dass die Mittel zur Peer-to-Peer Kommunikation zwischen den Automatisierungsgeräten vorgesehen sind. Bei dieser Kommunikationsform kann jedes Gerät eigenständig sowohl Information holen als auch zur Verfügung stellen. Hierbei wird wenig Verwaltungsaufwand generiert und eine dynamische Einbindung bzw. Ausgliederung von Kommunikationsteilnehmern wird ermöglicht. Allgemein reduziert eine derartige Kommunikationsform Zeit und Kosten. Die für den Austausch von Information benötigt werden.

Eine weitere vorteilhafte Ausbildung der Erfindung ist dadurch gekennzeichnet, dass das Datenübertragungssystem als Intranet und/oder Internet ausgebildet ist. Der Vorteil bei dieser Ausbildung ist, dass die Verbindung der Automatisierungsgeräte über ein Standardnetzwerk, insbesondere ein TCP/IP-Netzwerk, erfolgt. Für die Kommunikation zwischen den beteiligten Geräten kann aus diesem Grund ein Standardprotokoll, und zwar das HTTP-Protokoll zur Informationsübertragung verwendet werden. Eine Implementierung und auch eine Betreibung des Kommunikationssystems wird auf diese Weise vereinfacht, weil man nicht auf spezifische, proprietäre Protokolle zur Kommunikation angewiesen ist.

Eine weitere vorteilhafte Ausbildung der Erfindung ist dadurch gekennzeichnet, dass die Mittel zum Senden und/oder Empfangen als Basisdienst eines Betriebssystems zur Kommunikation ausgebildet sind. Es müssen also keine spezifischen Schnittstellen für die Übertragung von Information und der Kommunikation zwischen den Automatisierungsgeräten implementiert werden. Sowohl Engineering der Anlage als auch Inbetriebsetzung der Automatisierungsgeräte innerhalb des Kommunikationssystems werden durch diese vorteilhafte Ausbildung der Erfindung enorm vereinfacht und verbessert. Als vom Betriebssystem bereit gestellte Basisdienste können beispielsweise standardisierte HTTP Sockets wie der Socket 80 verwendet werden. Die Verwendung dieser Schnittstellen führt zu einer wesentlichen Verbesserung des Kommunikationssystems, da die standardisierten Schnittstellen billiger sind als spezifische, noch zu programmierende Verbindungen. Außerdem führt die Verwendung des Standards innerhalb des Kommunikationssystems zu einer Vereinfachung in der Weise, als das Anpassungen des Kommunikationssystems durch Hinzufügen weiterer Automatisierungsgeräte auch in der Zukunft leicht vorgenommen werden können, da nicht die Gefahr besteht, dass spezifische Kommunikationsprotokolle, die nur für eine spezielle Anwendung verwendet werden, veralten.

Vorteilhaft bei der Nutzung von HTTP-Sockets als Basisdienst eines Betriebssystems ist außerdem, dass ein Automatisierungsgerät auf einem entsprechenden Socket sowohl auf eingehende Anfragen warten kann als auch Anfragen an andere Automatisierungsgeräte über das entsprechende Socket absetzen kann. Es wird somit nur eine einzige Schnittstelle für das Senden sowie das Empfangen von Information bzw. Anfragen benötigt.

Eine weitere vorteilhafte Ausbildung der Erfindung ist dadurch gekennzeichnet, dass jedes Automatisierungsgerät zum Senden einer Anfrage über das Datenübertragungssystem an alle ihm bekannten weiteren Automatisierungsgeräte vorgesehen ist. Benötigt ein im System vorhandenes Automatisierungsgerät also Information, beispielsweise Prozesswerte oder Programme, die unter Umständen von anderen Automatisierungsgeräten bereitgestellt werden können, so wendet das Automatisierungsgerät über seine Sende- und Empfangseinrichtung, eine Anfrage über das Intranet bzw. Internet an alle anderen Geräte von denen es weiß, dass sie im System vorhanden sind. Der Vorteil bei dieser erfindungsgemäßen Ausbildung liegt darin, dass ein Automatisierungsgerät seine Anfrage nicht an seine zentrale Stelle senden und die Anfrage dort verwaltet werden muss, was unter Umständen zu einem Verlust der Anfrage führen kann, falls die zentrale Datenverarbeitungsvorrichtung betriebsunfähig ist. Die Verantwortung für die Anfrage liegt in diesem Fall also bei dem Automatisierungsgerät selbst, und es werden innerhalb kürzester Zeit möglichst viele andere beteiligte Partner gefragt, ob sie Information haben und gegebenenfalls bereit stellen können.

Eine weitere vorteilhafte Ausbildung der Erfindung ist dadurch gekennzeichnet, dass alle Automatisierungsgeräte zur Weiterleitung einer über die Mittel zum Senden und/oder Empfangen eingegangenen Anfrage an alle weiteren, ihnen bekannten Automatisierungsgeräte, welche die Anfrage noch nicht erhalten haben, vorgesehen sind. Der Vorteil bei dieser Ausbildung ist dadurch gegeben, dass die von einem ursprünglichen Automatisierungsgerät gesendete Anfrage nicht ausschließlich an die ihm bekannten weiteren Automatisierungsgeräte innerhalb des Systems weitergeleitet wird, sondern dass viele weitere Automatisierungsgeräte über eine Art Schneeballsystem von der Anfrage Kenntnis erlangen. Der Kreis der an der Kommunikation teilnehmenden Partner wird auf diese Weise dynamisch vergrößert, und die Chance, dass das die Anfrage stellende Automatisierungsgerät eine Antwort bzw. die von ihm gewünschte Information erhält, steigt.

Eine weitere vorteilhafte Ausbildung der Erfindung ist dadurch gekennzeichnet, dass die Automatisierungsgeräte zum Senden einer Adresse an das die Anfrage stellende Automatisierungsgerät vorgesehen sind. Wenn ein sich innerhalb des Systems befindendes Gerät feststellt, dass es Information besitzt, welche für das die ursprüngliche Anfrage stellende Automatisierungsgerät relevant ist, so kann es auf diese einfache Weise eine Mitteilung senden, in der die Adresse, unter der es innerhalb des Kommunikationssystems zu finden ist, angegeben ist. Das Automatisierungsgerät macht sich auf diese Weise dem ursprünglichen Automatisierungsgerät, welches die Anfrage gestellt hat, direkt bekannt. Vorteilhaft ist hierbei, dass das die Anfrage stellende Automatisierungsgerät genau weiß, wo die von ihm benötigte Information zu finden ist.

Eine weitere vorteilhafte Ausbildung der Erfindung ist dadurch gekennzeichnet, dass die Mittel zum Senden und/oder zum Empfangen auf den Automatisierungsgeräten zum direkten Abholen von Information zur Verfügung stellenden Automatisierungsgeräten unter der gesendeten Adresse vorgesehen sind. Hierbei ist vor allem vorteilhaft, dass die Information nicht über weitere, im System vorhandene Datenverarbeitungsanlagen gesendet wird, sondern dass vielmehr ein direkter Informationsaustausch zwischen den im System beteiligten Automatisierungsgeräten erfolgt. Hierdurch wird sowohl Speicherplatz, insbesondere auf einer potentiellen Datenverarbeitungsanlage, als auch Zeit bei der Informationsübertragung gespart. Die Nutzung des direkten Weges über das Datenübertragungssystem zeichnet sich vorteilhaft durch hohe Effizienz aus, da unnötige Datenübertragung und unnötige verlängerte Wege innerhalb des Datenübertragungssystems vermieden werden.

Eine weitere vorteilhafte Ausbildung der Erfindung ist dadurch gekennzeichnet, dass die Anfrage Mittel zum Abbruch ihrer Weiterleitung durch die Automatisierungsgeräte mit Hilfe eines Zeitlimits aufweist. Eine von einem Automatisierungsgerät getätigte Anfrage an alle weiteren Beteiligten innerhalb des Systems lebt also nicht notwendigerweise unendlich lange, falls kein Beteiligter innerhalb des Systems Information zur Verfügung stellen kann; die Anfrage wird vielmehr nach Ablauf einer definierten Zeiteinheit gelöscht, das heißt sie stirbt und sie verursacht somit keinen weiteren Datenaustausch zwischen den beteiligten Geräten innerhalb des Systems. Diese vorteilhafte Ausbildung gewährleistet somit, dass das System nicht mit der Zeit durch kursierende Anfragen, die zwischen den beteiligten Geräten hin und her gesendet werden, aufgrund von zu hohem Datenaufkommen lahm gelegt wird. Wird innerhalb einer vernünftigen Zeiteinheit die benötigte Information nicht gefunden, so ist die Wahrscheinlichkeit hoch, dass die Information bei den beteiligten Kommunikationsteilnehmern ohnehin nicht vorhanden ist und das Sterbenlassen der ursprünglichen Anfrage ist eine vorteilhafte Lösung zur Vermeidung von unnötigem Datentransfer.

Eine weitere vorteilhafte Ausbildung ist dadurch gekennzeichnet, dass eine an das Datenübertragungssystem angeschlossene Vorrichtung zur Verwaltung der Adressen der beteiligten Automatisierungsgeräte vorgesehen ist. Bei dieser erfindungsgemäßen Ausbildung kann ein Server an das Datenübertragungssystem angeschlossen werden, wobei dieser Server dann alle in System anwesenden Geräte in Bezug auf ihre Adresse verwaltet. Im Gegensatz zu einer Anfragenweiterleitung über das oben beschriebene Schneeballsystem wäre in diesem Fall eine Weiterleitung der Anfrage an den Indexserver, welcher dann seinerseits die Anfrage an die ihm bekannten Automatisierungsgeräte weiterleitet, gegeben. Alle im System beteiligten Automatisierungsgeräte bekämen die Suchanfrage also direkt über den Server ohne weitere Zwischenstufen. Eventuelle Zeitverzögerung, dadurch dass mehrere Automatisierungsgeräte zwischengeschaltet sind, würden bei dieser vorteilhaften Ausbildung der Erfindung entfallen.

Im Folgenden wird die Erfindung anhand der in den Figuren dargestellten Ausführungsbeispiele näher beschrieben und erläutert. Es zeigen:
- Figur 1: eine schematische Darstellung eines Systems zur Kommunikation und/oder zur Übertragung von Information zwischen Automatisierungsgeräten über ein Datenübertragungssystem,
- Figur 2: eine schematische Darstellung des Ablaufs einer Kommunikation bzw. Informationsbereitstellung zwischen den beteiligten Automatisierungsgeräten im System.

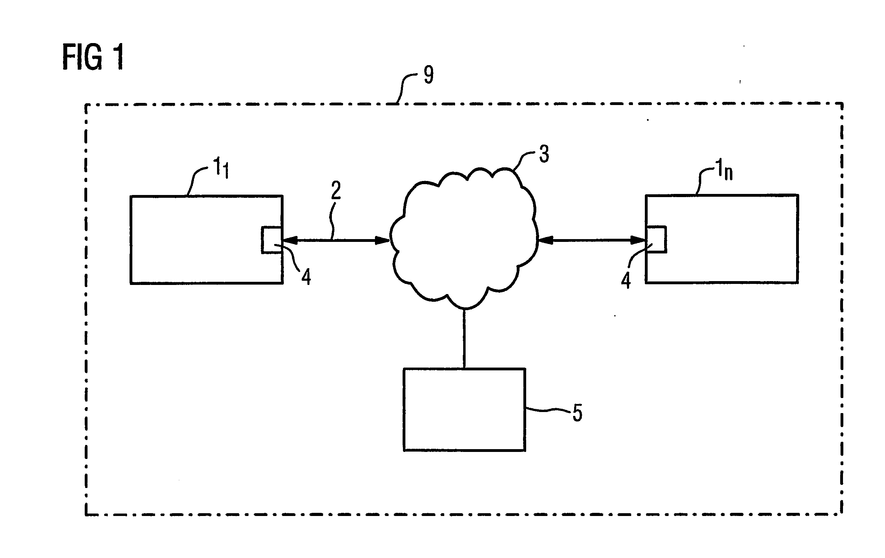

Figur 1 zeigt eine Darstellung des Systems 9, bei dem die beteiligten Automatisierungsgeräte 1_{1..n} über ein Datenübertragungssystem 2 kommunizieren. Das Datenübertragungssystem 2 ist als Intranet und/oder Internet 3 ausgebildet. Die Verbindung zwischen den beteiligten Automatisierungsgeräten 1_{1..n} und dem Datenübertragungssystem 2 erfolgt mit Hilfe von Mitteln zum Senden und/oder Empfangen 4, die sich auf den Automatisierungsgeräten befinden. Eine Vorrichtung 5 zur Adressverwaltung der Automatisierungsgeräte 1_{1..n} ist an das Datenübertragungssystem 2 angeschlossen.

Die Besonderheit des in Figur 1 dargestellten Systems 9 liegt vor allem darin, dass die im System 9 vorhandenen Automatisierungsgeräte 1_{1..n} über die Mittel 4 zum Senden und Empfangen von Information jederzeit Anfragen sowie Information über das Datenübertragungssystem 2 an alle anderen im System 9 vorhandenen Automatisierungsgeräte 1_{1..n} senden bzw. empfangen können. Die von den Automatisierungsgeräten 1_{1..n} benötigte Information bzw. die von ihnen gesendeten Anfragen müssen nicht, wie sonst üblich, über eine zentrale Datenverarbeitungsanlage gesendet werden und dort verwaltet werden. Die Automatisierungsgeräte 1_{1..n} kommunizieren vielmehr direkt über das Intra- und/oder Internet 3 miteinander. Eine Zeitverzögerung durch die Verarbeitung von Information auf einer Datenverarbeitungsanlage wird durch diese direkte Kommunikation vermieden. Die Automatisierungsgeräte können ihre Anfragen über die Mittel 4 zum Senden und Empfangen mit Hilfe von zwei verschiedenen Methoden bearbeiten. Gemäß des verwendeten HTTP-Protokolls auf den als HTTP-Socket ausgebildeten Mitteln 4 zum Senden und/oder Empfangen kann das Automatisierungsgerät sowohl Information von einem anderen Automatisierungsgerät holen, wobei die HTTP-Get-Methode angewendet wird als auch auf demselben Socket Informationen zu einem anderen Automatisierungsgerät übertragen, wobei die HTTP-Post/Put-Methode verwendet wird. Es wird nur also nur eine Schnittstelle für den Informationsaustausch benötigt. Das in Figur 1 dargestellte Datenübertragungssystem 2 stellt insgesamt mit den beteiligten Automatisierungsgeräten 1_{1..n} ein Netzwerk dar, in dem die beteiligten Automatisierungsgeräte 1_{1..n} in Bezug auf ihre Adressen bekannt sind. Das gesamte System 9 stellt weiterhin einen eigenen Namensraum dar, das heißt einen Bereich, in dem über einen bestimmten Namen definierte Entitäten, insbesondere Daten und Programme, angesprochen werden können. Vorteilhaft ist hierbei, dass allen beteiligten Automatisierungsgeräten 1_{1..n} die Möglichkeit gegeben wird, mit Hilfe eines Namens innerhalb des Namensraumes benötigte Information zu adressieren.

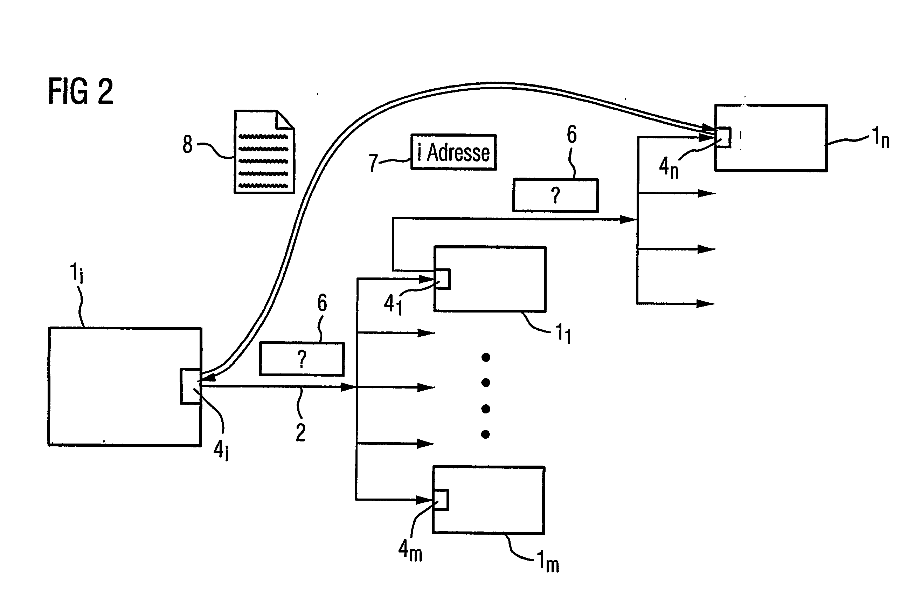

Figur 2 zeigt eine schematische Darstellung der Abwicklung von Anfragen 6, die von einem Automatisierungsgerät 1ᵢ abgegeben werden und die über weitere Automatisierungsgeräte 1_{1..n} weitergeleitet werden. Durch die Weiterleitung der Anfrage 6 werden schließlich alle im System 9 vorhandenen Automatisierungsgeräte 1_{1..n} erreicht. Die Automatisierungsgeräte 1_{1..n} senden, falls sie über die angefragte Information verfügen, ihre Adresse 7 an das anfragende Automatisierungsgerät 1ᵢ. Das anfragende Automatisierungsgerät holt sich die benötigte Information 8 direkt vom Automatisierungsgerät 1_{1..n}, welches die Information bereit stellt.

Der Vorteil bei der in Figur 2 dargestellten Abwicklung der Kommunikation bzw. des Informationsaustausches besteht darin, dass über die Anfrage 6, welche als ein Suchstring ausgebildet ist, alle innerhalb des Systems 9 vorhandenen Automatisierungsgeräte 1_{1..n} von der Tatsache, dass die Information benötigt wird, erfahren. Die als Suchstring formulierte Anfrage 6 kann von den beteiligten Automatisierungsgeräten 1_{1..n} innerhalb des Systems 9 unterschiedlich umgesetzt bzw. interpretiert werden. Beispielsweise kann ein Gerät den String in eine Datenbankabfrage übersetzen oder ein anderes Gerät eine Suche in einem Textdokument veranlassen. Dem suchenden Gerät 1ᵢ wird durch das Senden einer Adresse 7 direkt mitgeteilt, dass das die Adresse sendende Automatisierungsgerät die gesuchte Information bereitstellen kann. Das direkte Senden der Adresse erübrigt weitere Zwischenschritte innerhalb des Datenübertragungssystems 2, bei denen naturgemäß Fehler auftreten können und die Datenverkehr produzieren. Das suchende Automatisierungsgerät 1ᵢ kann die von ihm gewünschte Information 8 dann direkt vom Automatisierungsgerät 1_{1..n} über seine Mittel 4 zum Senden und Empfangen von Information 8 holen. Die in Figur 2 dargestellte Form des Informationsaustausches bzw. der Kommunikation ist besonders vorteilhaft, weil sie durch einen geringen Administrationsaufwand gekennzeichnet ist, da die beteiligten Automatisierungsgeräte 1_{1..n} sich automatisch im Datenübertragungssystem 2 an und abmelden können. Außerdem ist bei dieser Form des Datenaustausches eine Initiierung der Kommunikation von jedem im System 9 vorhandenen Gerät möglich. Stellt also ein Automatisierungsgerät 1 fest, dass es Information benötigt, so kann es sie selbsttätig besorgen.

Zusammenfassend betrifft die Erfindung ein System 9 und ein Verfahren zur Kommunikation zwischen Automatisierungsgeräten 1 und zur Übertragung von Information zwischen den Automatisierungsgeräten 1. Hierbei wird eine Peer to Peer Kommunikation über das Intra- bzw. Internet 3 verwendet, die eine direkten Informationsaustausch zwischen den Automatisierungsgeräten 1 ermöglicht.

## Patentansprüche

1. Verfahren zur Kommunikation und/oder Übertragung von Information (8) zwischen Automatisierungsgeräten (1_{1..n}) über ein Datenübertragungssystem (2),
• bei dem jedes beteiligte Automatisierungsgerät (1ᵢ) Anfragen und/oder Antworten sendet und/oder empfängt und
• bei dem die Kommunikation und/oder Übertragung von Information (8) direkt zwischen den Automatisierungsgeräten (1_{1..n}) erfolgt
**dadurch gekennzeichnet,**
**dass** die Automatisierungsgeräte (1_{1..n}) eine Adresse (7), die nicht über die dazwischen liegenden Automatisierungsgeräte übermittelt wird, an das die Anfrage (6) stellende Automatisierungsgerät (1ᵢ) senden.

2. Verfahren nach Anspruch 1,
**dadurch gekennzeichnet,**
**dass** die Kommunikation zwischen den Automatisierungsgeräten (1) in Form einer Peer-to-Peer Kommunikation erfolgt.

3. Verfahren nach Anspruch 1 oder 2,
**dadurch gekennzeichnet,**
**dass** das die Kommunikation und/oder Übertragung von Information über ein Intranet und/oder Internet (3) erfolgt.

4. Verfahren nach einem der Ansprüche 1 bis 3,
**dadurch gekennzeichnet,**
**dass** über einen Basisdienst eines Betriebssystems kommuniziert wird.

5. Verfahren nach einem der Ansprüche 1 bis 4,
**dadurch gekennzeichnet,**
**dass** jedes Automatisierungsgerät (1ᵢ) eine Anfrage (6) über das Datenübertragungssystem (2) an alle ihm bekannten weiteren Automatisierungsgeräte (1_{1..n}) sendet.

6. Verfahren nach einem der Ansprüche 1 bis 5,
**dadurch gekennzeichnet,**
**dass** alle Automatisierungsgeräte (1_{1..m}) eine über die Mittel (4) zum Senden und/oder Empfangen eingegangenen Anfrage (6) an alle weiteren, ihnen bekannten Automatisierungsgeräte (1_{m+1..n}), welche die Anfrage (6) noch nicht erhalten haben, weiterleiten.

7. Verfahren nach einem der Ansprüche 1 bis 6,
**dadurch gekennzeichnet,**
**dass** die Automatisierungsgeräte (1_{1...n}) Information (8) von Information (8) zur Verfügung stellenden Automatisierungägeräten (1_{1..n}) unter der gesendeten Adresse (7) direkt abholen.

8. Verfahren nach einem der Ansprüche 6 bis 7,
**dadurch gekennzeichnet,**
**dass** die Weiterleitung der Anfrage (6) durch die Automatisierungsgeräte (1_{1..n}) mit Hilfe eines Zeitlimits abgebrochen wird.

9. Verfahren nach einem der Ansprüche 1 bis 8,
**dadurch gekennzeichnet,**
**dass** die Adressen (7) der beteiligten Automatisierungsgeräte (1_{1..n}) durch eine an das Datenübertragungssystem (2) angeschlossene Vorrichtung (5) verwaltet werden.

10. Automatisierungsgerät (1ᵢ) zur Kommunikation und/oder Übertragung von Information (8) mit weiteren Automatisierungsgeräten (1_{1..n}) über ein Datenübertragungssystem (2),
• wobei das Automatisierungsgerät (1ᵢ) Mittel (4) zum Senden und/oder Empfangen von Anfragen und/oder Antworten aufweist und
• wobei die Mittel (4) zur direkten Kommunikation und/oder Übertragung von Information (8) zwischen den Automatisierungsgeräten (1_{1..n}) vorgesehen sind
**dadurch gekennzeichnet,**
**dass** das Automatisierungsgerät (1ᵢ) zum Senden einer Adresse (7), die nicht über die dazwischen liegenden Automatisierungsgeräte übermittelt wird, an ein, eine Anfrage (6) stellendes Automatisierungsgerät (1_{1..n}) vorgesehen ist.

11. Automatisierungsgerät nach Anspruch 10,
**dadurch gekennzeichnet,**
**dass** die Mittel (4) zur Peer-to-Peer Kommunikation zwischen den Automatisierungsgeräten (1) vorgesehen sind.

12. Automatisierungsgerät nach den Ansprüchen 10 oder 11, dass die Mittel (4) zum Senden und/oder Empfangen als Basisdienst eines Betriebssystems zur Kommunikation ausgebildet sind.

13. Automatisierungsgerät nach einem der Ansprüche 10 bis 12,
**dadurch gekennzeichnet,**
**dass** das Automatisierungsgerät (1ᵢ) zum Senden einer Anfrage (6) über das Datenübertragungssystem (2) an alle ihm bekannten weiteren Automatisierungsgeräte (1_{1..n}) vorgesehen ist.

14. Automatisierungsgerät nach einem der Ansprüche 10 bis 13,
**dadurch gekennzeichnet,**
**dass** das Automatisierungsgerät (1ᵢ) zur Weiterleitung einer über die Mittel (4) zum Senden und/oder Empfangen eingegangenen Anfrage (6) an alle weiteren, ihm bekannten Automatisierungsgeräte (1_{1..n}), welche die Anfrage (6) noch nicht erhalten haben, vorgesehen ist.

15. Automatisierungsgerät nach einem der Ansprüche 10 bis 14,
**dadurch gekennzeichnet,**
**dass** die Mittel (4) zum Senden und/oder Empfangen auf den Automatisierungsgeräten (1ᵢ) zum direkten Abholen von Information (8) von Information (8) zur Verfügung stellenden Automatisierungsgeräten (1_{1..n}) unter der gesendeten Adresse (7) vorgesehen sind.

16. Automatisierungsgerät nach einem der Ansprüche 10 bis 15,
**dadurch gekennzeichnet,**
**dass** die Anfrage (6) Mittel zum Abbruch ihrer Weiterleitung durch die Automatisierungsgeräte (1_{1..n}) mit Hilfe eines Zeitlimits aufweist.

17. Automatisierungssystem mit mindestens einem Automatisierungsgerät nach einem der Ansprüche 10 bis 16.

18. Automatisierungssystem nach Anspruch 17,
**dadurch gekennzeichnet,**
**dass** das Datenübertragungssystem (2) als Intranet und/oder Internet (3) ausgebildet ist.

19. Automatisierungssystem nach Anspruch 17 oder 18,
**dadurch gekennzeichnet,**
**dass** eine an das Datenübertragungssystem (2) angeschlossene Vorrichtung (5) zur Verwaltung der Adressen (7) der beteiligten Automatisierungsgeräte (1_{1..n}) vorgesehen ist.

## Claims

1. Method for communication and/or transmission of information (8) between automation devices (1_{1..n}) via a data transmission system (2)
• in which each automation device involved (1ᵢ) sends and/or receives requests and/or replies and
• in which the communication and/or transmission of information (8) takes place directly between the automation devices (1_{1..n})
**characterized in that**
the automation devices (1₁..ₙ) send an address (7) which is not transferred via the intermediate automation devices to the automation device (1ᵢ) which submits the request (6).

2. Method according to claim 1,
**characterized in that**
the communication between the automation devices (1) takes place in the form of peer-to-peer communication.

3. Method according to claim 1 or 2,
**characterized in that**
the communication and/or transmission of information takes place via an Intranet and/or Internet (3).

4. Method according to one of the claims 1 to 3
**characterized in that**
the communication takes place via a basic service of an operating system.

5. Method according to one of the claims 1 to 4,
**characterized in that**
each automation device (1ᵢ) sends a request (6) via the data transmission system (2) to all other automation devices (1_{1..n}) of which it has knowledge.

6. Method according to one of the claims 1 to 5,
**characterized in that**
all automation devices (1_{1..n}) forward a request (6) which arrives via sending and/or receiving mechanisms (4) to all other automation devices which it has knowledge (1_{m+1..n}), and which have not yet received the request (6).

7. Method according to one of the claims 1 to 6,
**characterized in that**
the automation devices (1_{1..n}) directly collect information (8) from automation devices (1_{1..n}) which make information (8) available at the address (7) which has been sent.

8. Method according to one of the claims 6 to 7,
**characterized in that**
the forwarding of the request (6) through the automation devices (1_{1..n}) is cancelled on the basis of a time limit.

9. Method according to one of the claims 1 to 8,
**characterized in that**
the addresses (7) of the participating automation devices (1_{1..n}) are managed by a device (5) which is connected to the data transmission system (2).

10. Automation device (1ᵢ) for communicating with and/or transmitting information (8) to and from further automation devices (1_{1..n}) via a data transmission system (2),
• in which the automation device (1ᵢ) features mechanisms (4) for sending and/or receiving requests and/or replies, and
• in which the mechanisms (4) are adapted for direct communication and/or transmission of information (8) between the automation devices (1_{1..n})
**characterized in that**
the automation device (1ᵢ) is used for sending an address (7) which is not transferred via the intermediate automation devices to an automation device (1_{1..n}) which submits the request (6).

11. Automation device according to claim 10,
**characterized in that**
the mechanisms (4) are used for peer-to-peer communication between the automation devices (1).

12. Automation device according to claims 10 or 11,
**characterized in that**
the mechanisms (4) for sending and/or receiving are embodied as a basic service of an operating system for communication.

13. Automation device according to one of the claims 10 to 12,
**characterized in that**
the automation device (1ᵢ) is used for sending a request (6) via the data transmission system (2) to all other automation devices (1_{1..n}) of which it has knowledge.

14. Automation device according to one of the claims 10 to 13,
**characterized in that**
the automation device (1ᵢ) is provided for forwarding a request (6) which arrives via the sending and/or receiving mechanisms (4) to all other automation devices (1_{1..n}) of which it has knowledge which have not yet received the request (6).

15. Automation device according to one of the claims 10 to 14,
**characterized in that**
the mechanisms (4) for sending and/or receiving are provided on the automation devices (1ᵢ) for the direct collection of information from automation devices (1_{1..n}) which make information available at the address (7) which has been sent.

16. Automation device according to one of the claims 10 to 15,
**characterized in that**
the request (6) comprises mechanisms for cancelling its forwarding through the automation devices (1_{1..n}) on the basis of a time limit.

17. Automation system with at least one automation device according to one of the claims 10 to 16.

18. Automation system according to claim 17
**characterized in that**
the data transmission system (2) is embodied as an Intranet and/or Internet (3).

19. Automation system according to claim 17 or 18
**characterized in that**
a device (5) connected to the data transmission system (2) is provided for managing the addresses (7) of the participating automation devices (1_{1..n}).

## Revendications

1. Procédé pour la communication et/ou la transmission d'informations (8) entre appareils d'automatisation (1_{1..n}) via un système de transmission de données (2),
• dans lequel chaque appareil d'automatisation concerné (1ᵢ) envoie et/ou reçoit des demandes et/ou des réponses et
• dans lequel la communication et/ou la transmission d'informations (8) s'effectue directement entre les appareils d' automatisation (1_{1..n}),
**caractérisé par le fait que** les appareils d'automatisation (1_{1..n}) envoient à l'appareil d'automatisation (1ᵢ) effectuant la demande (6) une adresse (7) qui n'est pas transmise par l'intermédiaire des appareils d'automatisation qui se trouvent entre.

2. Procédé selon la revendication 1,
**caractérisé par le fait que** la communication entre les appareils d'automatisation (1) s'effectue sous forme de communication Peer-to-Peer.

3. Procédé selon la revendication 1 ou 2,
**caractérisé par le fait que** la communication et/ou la transmission d'informations s'effectue via un intranet et/ou via Internet (3).

4. Procédé selon l'une des revendications 1 à 3,
**caractérisé par le fait que** l'on communique par l'intermédiaire d'un service de base d'un système

5. Procédé selon l'une des revendications 1 à 4,
**caractérisé par le fait que** chaque appareil d'automatisation (1ᵢ) envoie une demande (6) par l'intermédiaire du système de transmission de données (2) à tous les autres appareils d'automatisation (1_{1..n}) connus de lui.

6. Procédé selon l'une des revendications 1 à 5,
**caractérisé par le fait que** tous les appareils d'automatisation (1_{1..m}) retransmettent une demande (6) arrivée par l'intermédiaire des moyens (4) pour l'émission et/ou la réception à tous les autres appareils d'automatisation (1_{m+1..n}) qu'ils connaissent et qui n'ont pas encore reçu la demande (6).

7. Procédé selon l'une des revendications 1 à 6,
**caractérisé par le fait que** les appareils d'automatisation (1_{1..n}) vont chercher directement à l'adresse émise (7) des informations (8) d'appareils d'automatisation (1_{1..n}) mettant à disposition des informations (8).

8. Procédé selon l'une des revendications 6 à 7,
**caractérisé par le fait que** la retransmission de la demande (6) par les appareils d'automatisation (1_{1..n}) est interrompue à l'aide d'une limite temporelle.

9. Procédé selon l'une des revendications 1 à 8,
**caractérisé par le fait que** les adresses (7) des appareils d'automatisation concernés (1_{1..n}) sont gérées par un dispositif (5) raccordé au système de transmission de données (2).

10. Appareil d'automatisation (1ᵢ) pour la communication et/ou la transmission d'informations (8) avec d'autres appareils d'automatisation (1_{1..n}) par l'intermédiaire d'un système de transmission de données (2),
• dans lequel l'appareil d'automatisation (1ᵢ) comporte des moyens (4) pour l'émission et/ou la réception de demandes et/ou de réponses et
• dans lequel les moyens (4) sont prévus pour la communication et/ou la transmission directe d'informations (8) entre les appareils d'automatisation (1_{1..n}),
**caractérisé par le fait que** l'appareil d'automatisation (1ᵢ) est prévu pour envoyer à un appareil d'automatisation (1_{1..n}) effectuant une demande (6) une adresse (7) qui n'est pas transmise par l'intermédiaire des appareils d'automatisation qui se trouvent entre.

11. Appareil d'automatisation selon la revendication 10,
**caractérisé par le fait que** les moyens (4) sont prévus pour la communication Peer-to-Peer entre les appareils d'automatisation (1).

12. Appareil d'automatisation selon l'une des revendications 10 ou 11,
**caractérisé par le fait que** les moyens (4) pour l'émission et/ou la réception sont conçus comme service de base d'un système d'exploitation en vue de la communication.

13. Appareil d'automatisation selon l'une des revendications 10 à 12,
**caractérisé par le fait que** l'appareil d'automatisation (1ᵢ) est prévu pour l'envoi d'une demande (6) par l'intermédiaire du système de transmission de données (2) à tous les autres appareils d'automatisation (1_{1..n}) connus de lui.

14. Appareil d'automatisation selon l'une des revendications 10 à 13,
**caractérisé par le fait que** l'appareil d'automatisation (1ᵢ) est prévu pour la retransmission d'une demande (6) arrivée par l'intermédiaire des moyens (4) pour l'émission et/ou la réception à tous les autres appareils d'automatisation (1_{1..n}) qu'il connaît et qui n'ont pas encore reçu la demande (6).

15. Appareil d'automatisation selon l'une des revendications 10 à 14,
**caractérisé par le fait que** les moyens (4) pour l'émission et/ou la réception sont prévus sur les appareils d'automatisation (1ᵢ) pour aller chercher directement à l'adresse émise (7) des informations (8) d'appareils d'automatisation (1_{1..n}) mettant à disposition des informations (8).

16. Appareil d'automatisation selon l'une des revendications 10 à 15,
**caractérisé par le fait que** la demande (6) comporte des moyens pour interrompre sa retransmission par les appareils d'automatisation (1_{1..n}) à l'aide d'une limite temporelle.

17. Système d'automatisation comportant au moins un appareil d'automatisation selon l'une des revendications 10 à 16.

18. Système d'automatisation selon la revendication 17,
**caractérisé par le fait que** le système de transmission de données (2) est conçu comme un intranet et/ou comme Internet (3) .

19. Système d'automatisation selon la revendication 17 ou 18,
**caractérisé par le fait qu'**un dispositif (5) raccordé au système de transmission de données (2) est prévu pour la gestion des adresses (7) des appareils d'automatisation concernés (1_{1..n}).
